# EUROPEAN PATENT APPLICATION

(11) **EP 4 545 676 A1**
(43) Date of publication of application: **30.04.2025**
(21) Application number: 23827108.4
(22) Date of filing: 15.06.2023
(51) Int. Cl.: C23C 10/28, C21D 9/46, C22C 21/00, C22C 21/02, C22C 38/00, C23C 2/12, C23C 2/28, H01F 1/147

(54) **STEEL MATERIAL PROCESSING METHOD AND ELECTROMAGNETIC STEEL SHEET**

(30) Priority: 21.06.2022 JP 2022099368
(71) Applicant: AISIN CORPORATION, Kariya-shi, Aichi 448-8650 (JP)
(72) Inventor: NAKAGAWARA Yuji, Kariya-shi, Aichi 448-8650 (JP); OKADA Norikazu, Kariya-shi, Aichi 448-8650 (JP)
(74) Representative: Winter, Brandl - Partnerschaft mbB
(86) International application number: PCT/JP2023/022263
(87) International publication number: WO 2023/248922

(57) **Abstract**

An electrical steel sheet in which Al is appropriately diffused is manufactured at a relatively low cost. Disclosed is a steel treatment method including performing diffusion treatment in an oxidizing atmosphere on steel for an electrical steel sheet with an aluminum-containing layer formed on a surface of the steel. The steel preferably contains Si at more than 0.00 mass% and 7.00 mass% or less, and Al at more than 0.00 mass% and 2.00 mass% or less. The aluminum-containing layer is preferably in the form of a plating layer having a thickness of 2 µm or more and 30 µm or less. The composition of the plating layer includes Al, and may further contain another element such as Fe. The diffusion treatment is preferably performed under a treatment condition for obtaining a change gradient in which the Al concentration gradually decreases from the surface of the steel toward the inside.

## Description

### TECHNICAL FIELD

The present disclosure relates to a steel treatment method and an electrical steel sheet.

### BACKGROUND ART

There is known a technology in which a plating layer is formed on the surface of an electrical steel sheet by aluminizing treatment (hot-dip aluminum plating treatment) and then diffusion treatment is performed in a non-oxidizing atmosphere to create a state in which the Al concentration is gradient from the surface, thereby reducing loss in the electrical steel sheet (see, for example, Patent Documents 1 and 2).

There is also known a technology in which an Al-containing slurry is applied to the surface of an electrical steel sheet and then diffusion treatment is performed in a non-oxidizing atmosphere to create a state in which the Al concentration is gradient from the surface, thereby reducing loss in the electrical steel sheet (see, for example, Patent Document 3).

There is also known a technology in which a plating layer is formed on the surface of an electrical steel sheet by aluminizing treatment and then Al is infiltrated by long-term, high-temperature diffusion treatment in an oxidizing atmosphere to realize a grain-oriented electrical steel sheet with an increased Al concentration, thereby reducing loss in the electrical steel sheet (see, for example, Patent Document 4).

### Related Art Documents

### Patent Documents

Patent Document 1: German Patent No. 102005004037
Patent Document 2: European Patent Application Publication No. 1260598
Patent Document 3: WO2021/155280
Patent Document 4: Japanese Unexamined Patent Application Publication (Translation of PCT Application) No. 2018-509522 (JP 2018-509522 A)

### SUMMARY OF THE INVENTION

### Problem to be Solved by the Invention

With the above conventional technologies, however, it is difficult to manufacture electrical steel sheets in which Al is appropriately diffused at relatively low costs.

In one aspect, the present disclosure has an object to manufacture an electrical steel sheet in which Al is appropriately diffused at a relatively low cost.

### Means for Solving the Problem

One aspect provides a steel treatment method including performing diffusion treatment in an oxidizing atmosphere on steel for an electrical steel sheet with an aluminum-containing layer formed on a surface of the steel.

### Effects of the Invention

In one aspect, according to the present disclosure, it is possible to manufacture the electrical steel sheet in which Al is appropriately diffused at a relatively low cost.

### BRIEF DESCRIPTION OF THE DRAWINGS

[FIG. 1] FIG. 1 is a flowchart schematically showing a flow of steps included in a steel treatment method according to an embodiment.
[FIG. 2] FIG. 2 is a diagram schematically showing a sectional structure of steel obtained by aluminizing treatment.
[FIG. 3] FIG. 3 is a diagram schematically showing a sectional structure of steel obtained by diffusion treatment.
[FIG. 4] FIG. 4 is an explanatory diagram of a desired aluminum diffusion state, showing an example of the aluminum diffusion state in the steel obtained by the steel treatment method of the embodiment.
[FIG. 5] FIG. 5 is a flowchart schematically showing a flow of steps included in a steel treatment method according to Comparative Example 1.
[FIG. 6] FIG. 6 is a flowchart schematically showing a flow of steps included in a steel treatment method according to another comparative example.
[FIG. 7] FIG. 7 is a diagram schematically showing an Al concentration profile of steel obtained in Comparative Example 2.
[FIG. 8] FIG. 8 is an explanatory diagram of an Al infiltration amount calculation method (part 1).
[FIG. 9] FIG. 9 is an explanatory diagram of the Al infiltration amount calculation method (part 2).
[FIG. 10] FIG. 10 is a plot showing a relationship between Al gradient-thickness ratio × (Al infiltration amount-thickness ratio)^0.5 and a magnetic flux density decrease rate.
[FIG. 11] FIG. 11 is a plot showing a relationship between the Al infiltration amount-thickness ratio and the magnetic flux density decrease rate.

### MODES FOR CARRYING OUT THE INVENTION

Embodiments will be described in detail below with reference to the accompanying drawings. The dimensional ratios in the drawings are merely illustrative, and are not limited to these. The shapes etc. in the drawings may be partially exaggerated for convenience of description. In the following description, various substances may be identified by commonly known abbreviations or chemical symbols, as typified by aluminium being referred to as aluminum (or Al).

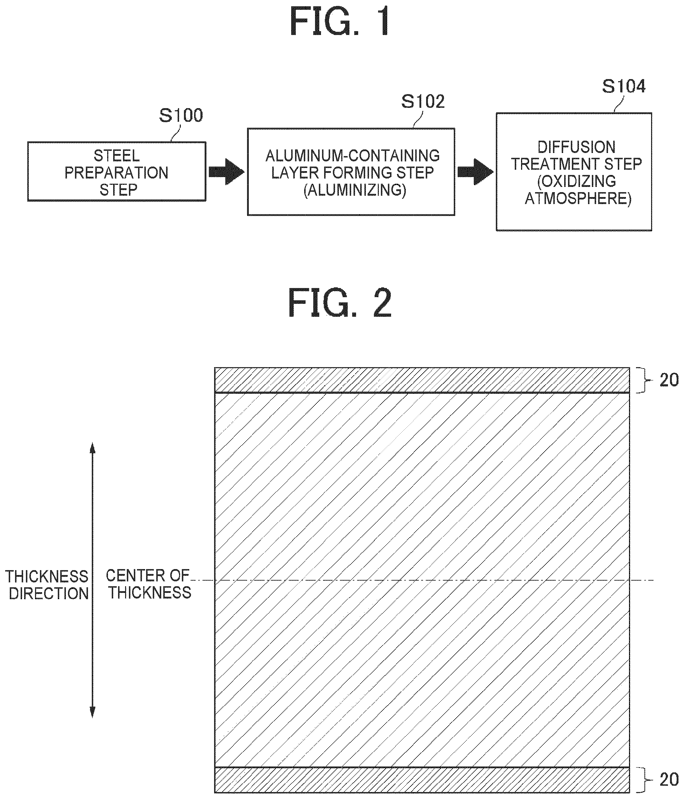

FIG. 1 is a flowchart schematically showing a flow of steps included in a steel treatment method according to the present embodiment. FIG. 2 is a diagram schematically showing a sectional structure of steel obtained by aluminizing treatment (steel after aluminizing treatment).

The steel treatment method of the present embodiment first includes a step of preparing steel (base material) having a desired thickness (step S100). The steel having a desired thickness can be obtained, for example, by rolling a material (e.g., in the form of a steel slab or steel billet) obtained by casting etc. The desired thickness is any thickness, but may preferably be substantially the same as the thickness of a final product (e.g., an electrical steel sheet) manufactured through this method. In this case, a rolling step after the subsequent aluminizing step is not necessary, and the manufacturing cost can be reduced.

The desired thickness of the steel is any thickness, but may be, for example, 0.20 mm to 0.35 mm, and more preferably 0.25 mm to 0.30 mm.

In the present embodiment, the steel is used for an electrical steel sheet, and preferably contains Si and Al. This is because the addition of Si and Al to steel reduces magnetocrystalline anisotropy and reduces hysteresis loss. This is also because the addition of Si and Al increases the electrical resistance of steel and therefore contributes to reducing eddy current loss. Thus, the addition of Si and Al leads to reduction in iron loss (hysteresis loss and eddy current loss) of steel. Excessive addition of Si and Al not only reduces the magnetic flux density but also reduces the workability in the manufacturing process for steel (rolling, pressing, etc.). The final product such as an electrical steel sheet may be pressed into a desired shape to form a rotor core, a stator core, etc. of a rotating electrical machine. In consideration of such tradeoffs, the steel (base material) preferably contains Si in a range of more than 0.00 mass% and 7.00 mass% or less, and Al in a range of more than 0.00 mass% and 2.00 mass% or less.

Next, the steel treatment method of the present embodiment includes an aluminum-containing layer forming step (step S102) for forming an aluminum-containing layer (see reference sign 20 in FIG. 2) on the steel. The aluminum-containing layer can be formed, for example, by aluminizing treatment. For example, the aluminum-containing layer is in the form of a plating layer having a thickness in a range of 2 µm or more and 30 µm or less. For example, the plating layer having a thickness in the range of 2 µm or more and 30 µm or less may be formed by gas wiping.

In a modification, the aluminum-containing layer may be formed by a process of applying an aluminum-containing slurry instead of the aluminizing treatment. However, the application of the aluminum-containing slurry is disadvantageous in that it is difficult to infiltrate Al into the steel sheet in the subsequent diffusion treatment.

The composition of the aluminum-containing layer (plating layer) may be aluminum alone, for example, in a case of an aluminum-containing layer formed by sputtering. Alternatively, the composition of the aluminum-containing layer (plating layer) includes, in addition to aluminum, one or more of iron (Fe), silicon (Si), and manganese (Mn). The composition preferably includes Al, Fe, and Si. For example, the plating layer may contain Al in a range of 20 mass% or more and 100 mass% or less, Fe in a range of 0.00 mass% or more and 80 mass% or less, and Si in a range of 0.00 mass% or more and 15 mass% or less. The plating layer may be a single layer or multiple layers.

In the steel treatment method of the present embodiment, the steel having a desired thickness is prepared as described above, thereby eliminating or reducing the need to perform a process of reducing the thickness by rolling etc. on the steel having the aluminum-containing layer as a preprocess prior to the subsequent diffusion treatment step. In a modification, however, the process of reducing the thickness by rolling etc. may be performed on the steel having the aluminum-containing layer.

Next, the steel treatment method of the present embodiment includes a diffusion treatment step (step S104) for performing diffusion treatment in an oxidizing atmosphere on the steel having the aluminum-containing layer.

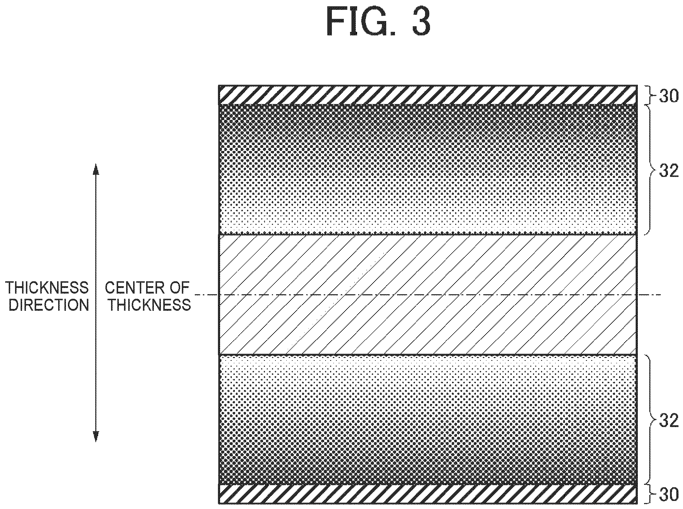

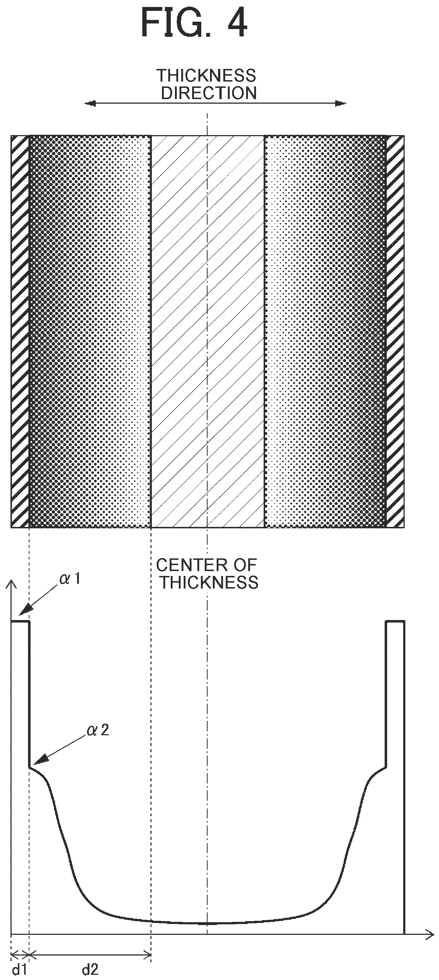

The diffusion treatment is treatment for creating a state in which the Al concentration is gradient from the steel surface based on Al contained in the aluminum-containing layer. That is, in the diffusion treatment, Al contained in the aluminum-containing layer is diffused from the steel surface in the thickness direction to form an Al diffusion layer (see reference sign 32 in FIG. 3). As will be described later with reference to FIG. 4, the Al diffusion layer has an Al concentration gradient (change gradient) in which the Al concentration increases toward the surface in the thickness direction.

In the present embodiment, in the diffusion treatment in the oxidizing atmosphere, an insulating coating (see reference sign 30 in FIG. 3) can also be formed on the steel surface. That is, in the diffusion treatment in the oxidizing atmosphere, the aluminum-containing layer on the steel surface is oxidized to form an oxide layer as the insulating coating on the steel surface. At this time, the oxide layer based on aluminum and iron contained in the aluminum-containing layer and oxygen contained in the oxidizing atmosphere is formed simultaneously with the Al diffusion layer. The oxide layer is a single or complex oxide of Al, Fe, Si, or Mn, but may contain any other element depending on the components contained in the aluminum-containing layer. For example, the oxide layer may contain 20 to 80 mass% of Al or Fe. This facilitates the formation of a desired oxide layer described later.

The term "oxidizing atmosphere" as used herein has the general meaning, but is substantially a concept excluding an atmosphere that is substantially free of oxygen, and including reaction performed in the air. Therefore, no vacuum equipment is required in the present embodiment. That is, the manufacturing cost can be reduced. Further, continuous processing can be performed, and the manufacturing efficiency can be increased.

The diffusion treatment may be performed under a predefined temperature condition for a predefined treatment period (hereinafter also referred to as "diffusion period").

When the diffusion temperature is extremely low, a long period is required to form the oxide layer and to infiltrate and diffuse Al. Further, the desired oxide layer is not obtained. In this case, sufficient insulation is not obtained. Conversely, when the diffusion temperature is extremely high, the desired oxide layer is not obtained, either. When the diffusion period is extremely short or long, a desired aluminum diffusion state described later is not obtained.

In consideration of such tradeoffs, the diffusion treatment may preferably be performed at a temperature in a range of 900°C or more and 1200°C or less (hereinafter also referred to as "diffusion temperature") for a diffusion period in a range of 0.1 minutes or more and 1920 minutes or less. Thus, it is possible to easily form the desired oxide layer and to easily realize the desired aluminum diffusion state as described later.

The details of the manufacturing conditions for the diffusion treatment (temperature condition and treatment period) may be adapted depending on the thickness of the aluminum-containing layer obtained in step S102 (i.e., the plating thickness), etc. so as to simultaneously obtain the desired oxide layer and the desired aluminum diffusion state (infiltration amount and gradient state). The temperature condition is a concept including not only the diffusion temperature but also the rate of temperature rise to the diffusion temperature and the rate of cooling from the diffusion temperature.

The thickness of the desired oxide layer is basically any thickness as long as it functions as the insulating coating, but the thickness is preferably as small as possible. When the thickness of the oxide layer is extremely large, the total magnetic flux of the steel decreases. In consideration of this point, the thickness of the desired oxide layer is in a range of 1 µm or more and 25 µm or less.

The desired aluminum diffusion state is basically any state as long as the Al diffusion layer has the Al concentration gradient (change gradient). Preferable ranges of various parameters will be described below with reference to FIG. 4.

FIG. 4 is an explanatory diagram of the desired aluminum diffusion state, showing an example of the aluminum diffusion state in the steel obtained by the steel treatment method of the present embodiment. In FIG. 4, the upper side is a schematic sectional view of the steel, and the lower side shows the aluminum diffusion state in the thickness direction of the steel. The aluminum diffusion state in the steel is shown as an Al concentration profile of the steel in the thickness direction with the horizontal axis representing the distance from the center of the thickness of the steel and the vertical axis representing the Al concentration. The Al concentration profile of the steel in the thickness direction may be symmetrical across the center of the thickness. In FIG. 4, d1 represents the thickness of the insulating coating, and d2 represents an Al diffusion depth. In FIG. 4, α1 represents an Al concentration in the insulating coating, and α2 represents an Al concentration on the surface of the Al diffusion layer.

As shown in FIG. 4, in the present embodiment, the Al diffusion layer has the Al concentration gradient (change gradient) in which the Al concentration increases toward the surface in the thickness direction. Specifically, in the Al diffusion layer, the Al concentration is highest on the surface of the Al diffusion layer (i.e., the boundary surface with the oxide layer), and gradually decreases toward the center of the thickness.

When the Al concentration on the surface of the Al diffusion layer (hereinafter also referred to as "surface Al concentration of Al diffusion layer") is low, the above iron loss reduction effect is not obtained. When the surface Al concentration is extremely high, the magnetic flux density may decrease and the workability in the manufacturing process for the steel (rolling, pressing, etc.) may decrease as described above. When the Al diffusion depth is extremely small, the above iron loss reduction effect is not obtained as described above. When the Al diffusion depth is extremely large, for example, the magnetic flux density may decrease as described above.

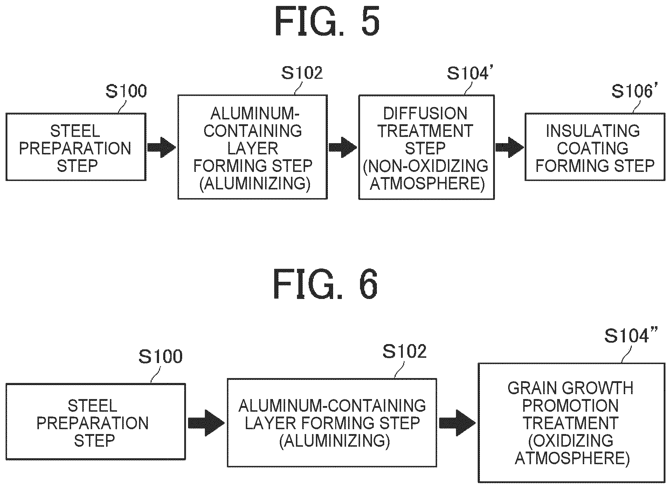

In consideration of such tradeoffs, the surface Al concentration of the Al diffusion layer is preferably in a range of 1.50 mass% or more and 10.00 mass% or less. Next, the effects of the present embodiment will further be described with reference to FIG. 5 in comparison with a steel treatment method according to a comparative example.

FIG. 5 is a flowchart schematically showing a flow of steps included in a steel treatment method according to Comparative Example 1.

The steel treatment method according to Comparative Example 1 is the same as the steel treatment method according to the present embodiment in terms of the preparation step (step S100) and the aluminum-containing layer forming step (step S102), but is different from the steel treatment method according to the present embodiment in terms of the subsequent steps.

Specifically, the steel treatment method according to Comparative Example 1 includes a diffusion treatment step (step S104') for performing diffusion treatment in a non-oxidizing atmosphere on the steel having the aluminum-containing layer. The diffusion treatment conditions other than the atmosphere may be the same as those in the above diffusion treatment step (step S104). The diffusion treatment in the non-oxidizing atmosphere is different from the diffusion treatment performed in the oxidizing atmosphere in the steel treatment method according to the present embodiment in that no oxide layer is formed because of the non-oxidizing atmosphere.

Next, the steel treatment method according to Comparative Example 1 includes a step (step S106') of forming an insulating coating on the steel subjected to the diffusion treatment in the non-oxidizing atmosphere. In this case, the insulating coating may be a coating different from the oxide layer.

In Comparative Example 1, vacuum equipment is required for the diffusion treatment in the non-oxidizing atmosphere.

In the present embodiment, as described above, no vacuum equipment etc. is required because of the use of the diffusion treatment in the oxidizing atmosphere. Thus, the manufacturing cost can be reduced. Further, continuous processing can be performed, and the manufacturing efficiency can be increased.

In Comparative Example 1, the step of forming an insulating coating needs to be added separately after the diffusion treatment in the non-oxidizing atmosphere.

In the present embodiment, as described above, the oxide layer can be formed as the insulating coating by the diffusion treatment in the oxidizing atmosphere. That is, the diffusion treatment in the oxidizing atmosphere is treatment that can simultaneously obtain the desired oxide layer and the desired aluminum diffusion state.

As described above, with the steel treatment method of the present embodiment, an electrical steel sheet in which Al is appropriately diffused with the Al concentration gradient (change gradient) can be manufactured at a relatively low cost.

FIG. 6 is a flowchart schematically showing a flow of steps included in a steel treatment method according to another comparative example (hereinafter also referred to as "Comparative Example 2").

The steel treatment method according to Comparative Example 2 is the same as the steel treatment method according to the present embodiment in terms of the preparation step (step S100) and the aluminum-containing layer forming step (step S102), but is different from the steel treatment method according to the present embodiment in terms of the subsequent step.

Specifically, the steel treatment method according to Comparative Example 2 includes a treatment step (step S104") for performing grain growth promotion treatment in an oxidizing atmosphere on the steel having the aluminum-containing layer. The grain growth promotion treatment is different from the diffusion treatment performed in the oxidizing atmosphere in the steel treatment method according to the present embodiment in terms of the conditions for diffusing Al so that the Al concentration is uniform inside the steel. Specifically, the grain growth promotion treatment tends to have a significantly higher diffusion temperature and a significantly longer diffusion period than those in the diffusion treatment performed in the oxidizing atmosphere in the steel treatment method according to the present embodiment.

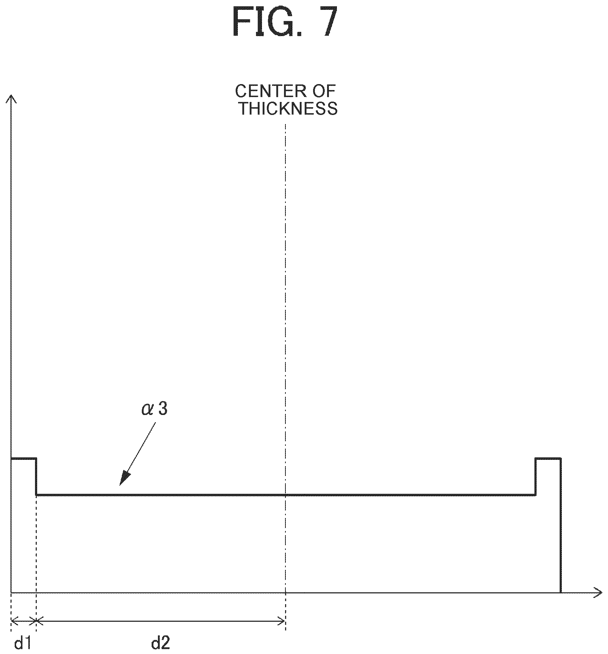

FIG. 7 is a diagram schematically showing an Al concentration profile of steel obtained in Comparative Example 2 in comparison with the lower side of FIG. 4 in the present embodiment.

As shown in FIG. 7, the Al diffusion layer has substantially the same Al concentration on the surface of the Al diffusion layer and at the center of the thickness of the steel. That is, the Al concentration is substantially constant from the surface of the Al diffusion layer to the center of the thickness of the steel (see concentration α3). In such steel, the iron loss reduction effect is not sufficiently obtained by the Al infiltration.

In the present embodiment, as described above, it is possible to obtain the steel having the desired oxide layer and the desired aluminum diffusion state without excessively increasing the diffusion temperature and without excessively increasing the diffusion period. That is, from the viewpoints of energy efficiency and manufacturing efficiency, it is possible to efficiently manufacture an electrical steel sheet having good characteristics in which a decrease in magnetic flux density etc. is unlikely to occur.

As described above, with the steel treatment method of the present embodiment, an electrical steel sheet in which Al is appropriately diffused with the Al concentration gradient (change gradient) can be manufactured at a relatively low cost. Examples

Next, several examples of steel actually treated by the inventors of the present application using the steel treatment method according to the present embodiment will be described.

The inventors of the present application prepared three types of steel (denoted as steel types A, B, C) having component properties shown in Table 1 below, and performed treatment based on the steel treatment method according to the present embodiment, thereby obtaining results shown in Table 2. Specifically, in Example 1 etc., a ring-shaped test piece having an outside diameter of 64 mm and a bore diameter of 50 mm was cut out using a laser from a steel sheet having the chemical components shown in Table 1, and the test piece was subjected to aluminizing treatment to obtain a plating thickness shown in Table 2. After the aluminizing treatment, diffusion treatment was performed under the conditions shown in Table 2. In Example 5 etc., a single test piece was cut out using a laser from a steel sheet having the chemical components shown in Table 1, and the test piece was similarly subjected to aluminizing treatment to obtain a plating thickness shown in Table 2. After the aluminizing treatment, diffusion treatment was performed under the conditions shown in Table 2. The shapes of the test pieces are different between the ring shape and the single sheet (rectangular shape with a size of 20 × 50 mm), but the differences substantially do not affect the test results (e.g., iron loss reduction rate and magnetic flux density decrease rate).

The conditions shown in Table 2 indicate whether annealing was performed. The annealing conditions were 750°C × 60 min followed by furnace cooling, but may be any conditions. The annealing affects the test results in terms of reduction in the effects of laser cutting (e.g., increase in iron loss). In a case of steel sheets to be used for rotors, the annealing may be unnecessary.

All the three types of steel (denoted as steel types A, B, C) contain Si at 0 to 7.00 mass%, Mn at 0 to 1.00 mass%, and Al at 0 to 2.00 mass%. The base material having such a composition is preferable, but the base material is not limited to this. In Table 2, "mass%" means percent by mass.

**[Table 1]**

| Steel type | Components (mass%) | | | | | |
|---|---|---|---|---|---|---|
| | C | Si | Mn | S | Al | N |
| A | 0.004 | 2.15 | 0.24 | 0.001 | 0.33 | 0.002 |
| B | 0.011 | 3.01 | 0.17 | 0.001 | 0.52 | 0.002 |
| C | 0.007 | 3.12 | 0.56 | 0.001 | 1.08 | 0.002 |

**[Table 2]**

| Category | Steel manufacturing conditions | | | | | | | | | |
|---|---|---|---|---|---|---|---|---|---|---|
| | Steel type | Base material components (mass%) | | | Plating thickness by aluminizing treatment (µm) | Diffusion treatment | | | Thickness (µm) | Annealing |
| | | Si | Mn | Al | | Atmosphere | Temperature (°C) | Time (min) | | |
| Example 1 | A | 2.15 | 0.24 | 0.33 | 24 | Air | 1100 | 30 | 334 | No |
| Example 2 | A | 2.15 | 0.24 | 0.33 | 24 | Air | 1100 | 5 | 345 | No |
| Example 3 | B | 3.01 | 0.17 | 0.52 | 51 | Air | 1100 | 60 | 371 | No |
| Comparative Example 1 | B | 3.01 | 0.17 | 0.52 | 51 | Air | 1050 | 30 | 367 | No |
| Example 4 | B | 3.01 | 0.17 | 0.52 | 19 | Air | 1100 | 60 | 370 | Yes |
| Example 5 | B | 3.01 | 0.17 | 0.52 | 23 | Air | 1100 | 60 | 364 | No |
| Example 6 | B | 3.01 | 0.17 | 0.52 | 25 | H2, O2, Ar | 1050 | 60 | 374 | Yes |
| Example 7 | B | 3.01 | 0.17 | 0.52 | 17 | H2, O2, Ar | 1050 | 180 | 357 | Yes |
| Comparative Example 2 | C | 3.12 | 0.56 | 1.08 | 26 | H2, O2, Ar | 1050 | 60 | 277 | Yes |
| Comparative Example 3 | C | 3.12 | 0.56 | 1.08 | 26 | H2, O2, Ar | 1050 | 180 | 280 | Yes |
| Example 8 | C | 3.12 | 0.56 | 1.08 | 39 | Air | 1050 | 120 | 278 | No |
| Example 9 | C | 3.12 | 0.56 | 1.08 | 39 | Air | 1050 | 240 | 281 | No |
| Comparative Example 4 | C | 3.12 | 0.56 | 1.08 | 12 | Air | 1050 | 1 | 254 | Yes |

**[Table 3]**

| Category | Evaluation 1 | | | | | | | |
|---|---|---|---|---|---|---|---|---|
| | Oxide layer | | | Diffusion layer | | | | |
| | Thick -ness (µm) | Al concentration (mass%) | Fe concentration (mass%) | Surface Al concentration (mass%) | Central Al concentration (mass%) | Diffusion depth (µm) | Diffusion depth-thickness ratio | Al gradient (mass%/µm) |
| Example 1 | 17 | 47 | 7 | 2.4 | 0.33 | 108 | 0.32 | 0.019 |
| Example 2 | 15 | 46 | 4 | 5.3 | 0.33 | 70 | 0.20 | 0.071 |
| Example 3 | 10 | 53 | 2 | 9.0 | 2.34 | 186 or more | 0.50 or more | 0.036 |
| Comparative Example 1 | 16 | 38 | 22 | 14.6 | 0.52 | 132 | 0.36 | 0.107 |
| Example 4 | 7 | 44 | 3 | 6.1 | 1.77 | 185 or more | 0.50 or more | 0.023 |
| Example 5 | 5 | 50 | 1 | 5.3 | 1.85 | 182 or more | 0.50 or more | 0.019 |
| Example 6 | 1.7 | 0.2 | 62 | 6.6 | 0.97 | 187 or more | 0.50 or more | 0.030 |
| Example 7 | 2.1 | 2 | 61 | 3.6 | 2.13 | 179 or more | 0.50 or more | 0.008 |
| Comparative Example 2 | 0.9 | 33 | 12 | 10.3 | 5.44 | 139 or more | 0.50 or more | 0.035 |
| Comparative Example 3 | 0.9 | 38 | 25 | 7.6 | 6.95 | 140 or more | 0.50 or more | 0.005 |
| Example 8 | 8 | 44 | 7 | 8.2 | 6.59 | 139 or more | 0.50 or more | 0.012 |
| Example 9 | 13 | 52 | 0.8 | 8.2 | 7.47 | 141 or more | 0.50 or more | 0.005 |
| Comparative Example 4 | 2.5 | 28 | 28 | 15.8 | 1.08 | 65 | 0.26 | 0.226 |

**[Table 4]**

| Category | Evaluation 1 | | | |
|---|---|---|---|---|
| | Diffusion layer | | | |
| | Al gradient-thickness ratio (mass%/[µm]^2) | Al infiltration amount (mass%·µm) | Al infiltration amount-thickness ratio (mass%/) | Al gradient-thickness ratio * (Al infiltration amount-thickness ratio)^0.5 ([mass%]^1.5/[µm]^2) |
| Example 1 | 0.000057 | 112 | 0.34 | 0.000033 |
| Example 2 | 0.000206 | 174 | 0.50 | 0.000146 |
| Example 3 | 0.000097 | 958 | 2.58 | 0.000156 |
| Comparative Example 1 | 0.000292 | 929 | 2.53 | 0.000464 |
| Example 4 | 0.000062 | 632 | 1.71 | 0.000081 |
| Example 5 | 0.000052 | 556 | 1.53 | 0.000065 |
| Example 6 | 0.000080 | 611 | 1.63 | 0.000103 |
| Example 7 | 0.000022 | 420 | 1.18 | 0.000024 |
| Comparative Example 2 | 0.000126 | 944 | 3.41 | 0.000233 |
| Comparative Example 3 | 0.000018 | 867 | 3.10 | 0.000031 |
| Example 8 | 0.000043 | 878 | 3.16 | 0.000077 |
| Example 9 | 0.000018 | 952 | 3.39 | 0.000033 |
| Comparative Example 4 | 0.000890 | 478 | 1.88 | 0.001221 |

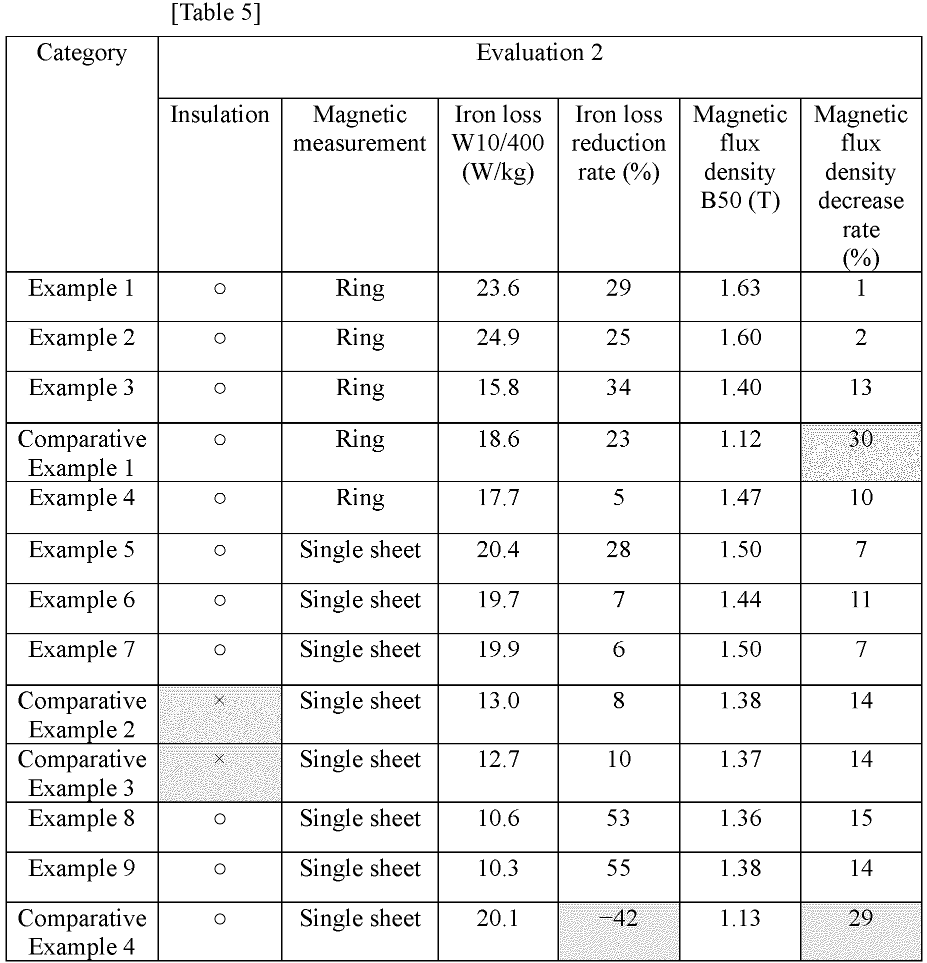

As a result, results shown in Tables 3, 4, and 5 were obtained. Evaluation 1 shown in Tables 3 and 4 is an evaluation based on FE (Field Emission)-EPMA (Electron Probe Micro Analyzer) analysis. The Al concentration and the Fe concentration in the oxide layer in Evaluation 1 may each be the concentration at or near the center of the oxide layer. The Fe concentration tends to be higher near the surface of the oxide layer. The iron loss in Evaluation 2 shown in Table 5 is the result of alternating-current magnetic measurement, and the magnetic flux density in Evaluation 2 is the result of direct-current magnetic measurement. The diffusion depth-thickness ratio is a value obtained by dividing the diffusion depth by the thickness. In Table 5, the magnetic flux density is a magnetic flux density (B50) at a magnetizing force of 5000 A/m, and the iron loss is an iron loss (W10/400) at a frequency of 400 Hz and a magnetic flux density of 1.0 T. In Table 5, the iron loss reduction rate is a rate obtained by dividing the amount of reduction in iron loss from that of an untreated product by the iron loss of the untreated product.

As understood from Evaluation 1 shown in Tables 3 and 4 and Evaluation 2 shown in Table 5, in all of the examples, the iron loss reduction rate at the frequency of 400 Hz and the magnetic flux density of 1 T is more than 0%, and the magnetic flux density decrease rate at 5 kA/m is 25% or less, thereby obtaining good characteristics.

As understood from Evaluation 1 shown in Tables 3 and 4 and Evaluation 2 shown in Table 5, the diffusion depth-thickness ratio is extremely high in Example 3. Therefore, the magnetic flux density decrease rate (decrease rate relative to the untreated product) is relatively high, but is 25% or less. In Comparative Example 1, the surface Al concentration of the diffusion layer is extremely high. Therefore, the magnetic flux density decrease rate is relatively high, and exceeds 25%. From these evaluation results, in order to reduce the Al infiltration amount in the steel treatment method of the present embodiment, the plating thickness is preferably 50 µm or less, and more preferably 30 µm or less (20% or less of the thickness). It is also understood that the surface Al concentration of the diffusion layer is preferably 14.0 mass% or less, and more preferably less than 10.0 mass%.

As shown in Table 2, in Examples 6 and 7 and Comparative Examples 2 and 3, the atmosphere is a low oxygen potential atmosphere instead of the air. The low oxygen potential atmosphere is an atmosphere containing oxygen, hydrogen, and argon, and has an oxygen concentration significantly lower than that in the air. For this reason, the thickness of the oxide layer is relatively small as shown in Evaluation 1 in Tables 3 and 4. The thickness of the oxide layer is desirably 1 µm or more as described above in order to secure the necessary electrical insulation properties as the insulating coating. The oxide layer is a single layer or multiple layers. In the case of multiple layers, the overall thickness is desirably 1 µm or more. As the thickness of the oxide layer increases, a smaller iron loss can be expected (see, for example, the significant difference between Comparative Examples 2 and 3 and Examples 8 and 9).

As shown in Tables 3 and 4, the inventors of the present application used two evaluation parameters: Al infiltration amount-thickness ratio (unit: mass%) and Al gradient-thickness ratio × (Al infiltration amount-thickness ratio)^0.5 (unit: mass%^1.5/[µm]^2). The symbol "^" in ^0.5 and ^2 indicates a power. For example, ^0.5 indicates the 0.5th power. The symbol "*" in Table 4 indicates multiplication.

When the infiltration amount of aluminum in the Al diffusion layer (hereinafter also referred to as "Al infiltration amount") is calculated based on the aluminum diffusion depth and the aluminum concentration at the center of the base material thickness (hereinafter also referred to as "central Al concentration"), the Al infiltration amount-thickness ratio is a value obtained by dividing the Al infiltration amount by the base material thickness. Specifically, in this test, the Al infiltration amount was calculated as follows based on the aluminum diffusion depth, the surface Al concentration, and the central Al concentration. When aluminum diffusion depth < base material thickness / 2, Al infiltration amount = (surface Al concentration - central Al concentration) × aluminum diffusion depth × 1/2

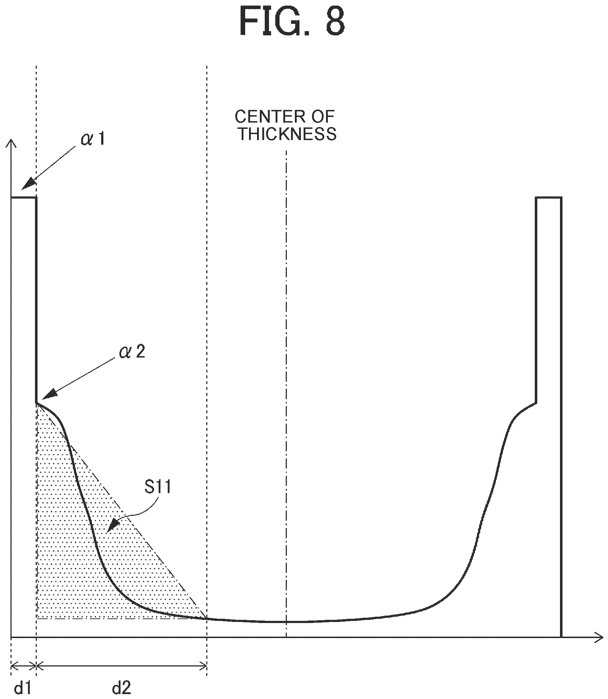

In this case, the Al infiltration amount corresponds to an area S11 of a triangle indicated by a long dashed short dashed line in FIG. 8. In this case, the three vertices of the triangle correspond to, as shown in FIG. 8, a position corresponding to the base material surface and the surface Al concentration, a position corresponding to the base material surface and the central Al concentration, and a position corresponding to an inner side from the base material surface by the aluminum diffusion depth and the central Al concentration. When aluminum diffusion depth ≥ base material thickness / 2, Al infiltration amount = (surface Al concentration + central Al concentration - base material Al concentration × 2) × aluminum diffusion depth × 1/2

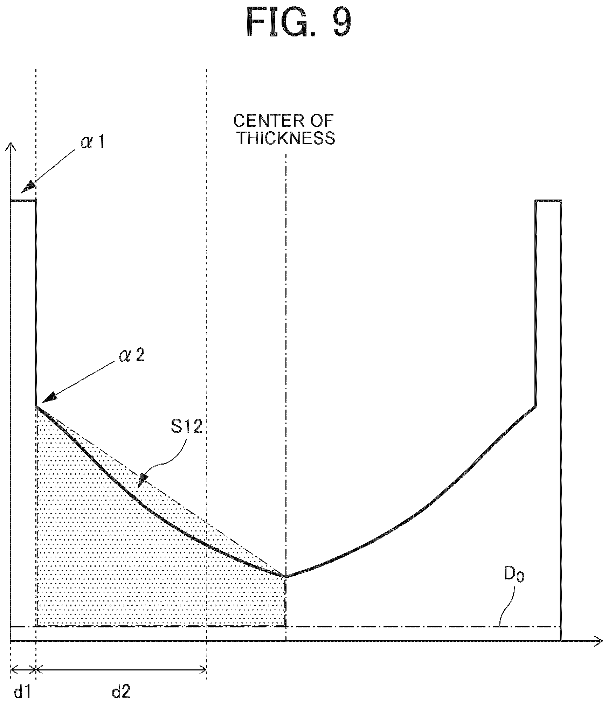

In this case, the Al infiltration amount corresponds to an area S12 of a trapezoid indicated by a long dashed short dashed line in FIG. 9. In this case, the four vertices of the trapezoid correspond to, as shown in FIG. 9, a position corresponding to the base material surface and the surface Al concentration, a position corresponding to the base material surface and the base material Al concentration, a position corresponding to an inner side from the base material surface by the aluminum diffusion depth and the central Al concentration, and a position corresponding to the inner side from the base material surface by the aluminum diffusion depth and the base material Al concentration.

The case where aluminum diffusion depth ≥ base material thickness / 2 corresponds to the case where the diffusion depth-thickness ratio is 0.50 or more in Table 3. The base material Al concentration corresponds to the base material components in Table 2 (see D₀ in FIG. 9 as well). The base material thickness corresponds to the thickness in Table 2, and is a thickness obtained by subtracting the thickness of the oxide layer from the overall thickness.

The Al gradient-thickness ratio is the change gradient of the aluminum concentration with respect to the change in the thickness direction in the Al diffusion layer. The Al gradient-thickness ratio is a value obtained by dividing the Al gradient by the base material thickness. Specifically, in this test, the Al gradient was calculated as follows. Al gradient = (surface Al concentration - central Al concentration) / aluminum diffusion depth

The base material thickness corresponds to the thickness in Table 2, and is a thickness obtained by subtracting the thickness of the oxide layer from the overall thickness. Similarly to the above Al infiltration amount-thickness ratio, when aluminum diffusion depth ≥ base material thickness / 2, the aluminum diffusion depth may be equal to base material thickness / 2.

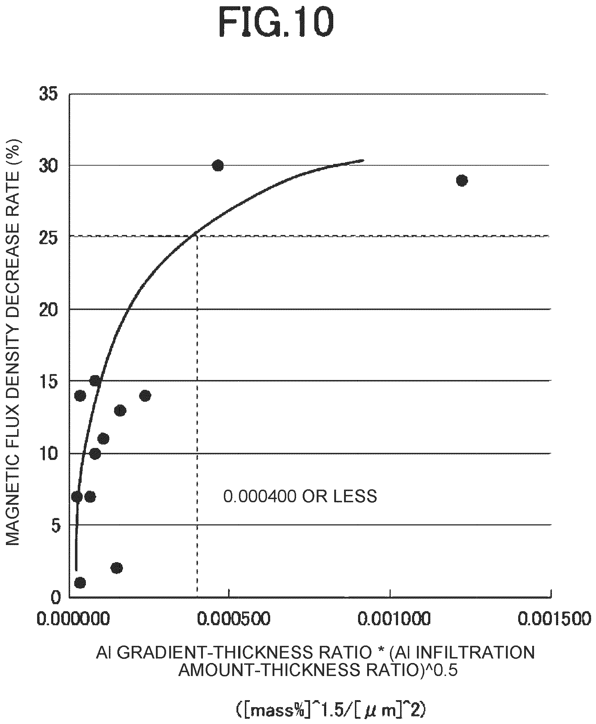

FIG. 10 is a plot of the results of the examples and the comparative examples with the horizontal axis representing Al gradient-thickness ratio × (Al infiltration amount-thickness ratio)^0.5 and the vertical axis representing the magnetic flux density decrease rate. FIG. 10 also shows a curve obtained by interpolation for the plotted points.

As understood from FIG. 10, when Al gradient-thickness ratio × (Al infiltration amount-thickness ratio)^0.5 is 0.000400 or less, the magnetic flux density decrease rate can be reduced to about 25% or less. In FIG. 10, the two plotted points where the magnetic flux density decrease rate exceeds 25% correspond to Comparative Examples 1 and 4. The plotted points where the magnetic flux density decrease rate is 25% or less correspond to the examples.

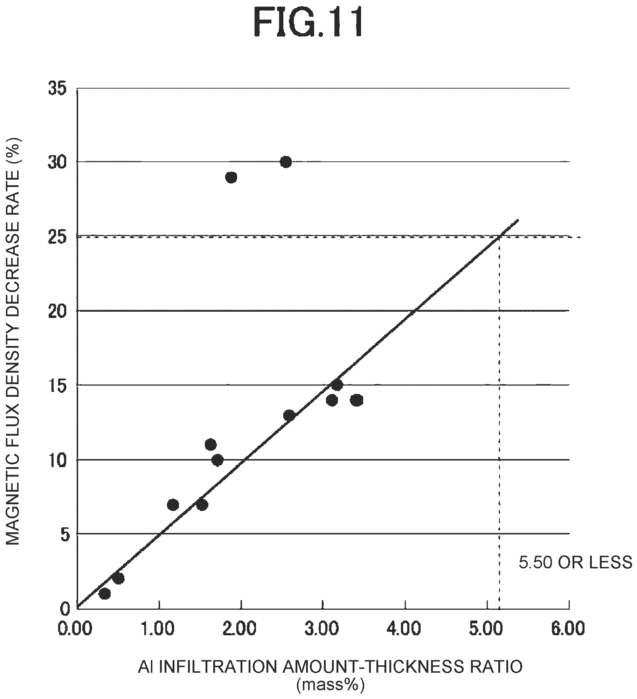

FIG. 11 is a plot of the results of the examples and the comparative examples with the horizontal axis representing the Al infiltration amount-thickness ratio and the vertical axis representing the magnetic flux density decrease rate. FIG. 11 also shows a straight line obtained by interpolation for the plotted points.

As understood from FIG. 11, when the Al infiltration amount-thickness ratio is 5.50 or less, it is expected that the magnetic flux density decrease rate can be reduced to about 25% or less. In FIG. 11, the two plotted points where the magnetic flux density decrease rate exceeds 25% correspond to Comparative Examples 1 and 4. The plotted points where the magnetic flux density decrease rate is 25% or less correspond to the examples. At the plotted points corresponding to Comparative Examples 1 and 4 as well, the Al infiltration amount-thickness ratio is 5.50 or less. As described above with reference to, for example, FIG. 10, however, these plotted points do not satisfy the condition that Al gradient-thickness ratio × (Al infiltration amount-thickness ratio)^0.5 is 0.000400 or less. Under this condition, these plotted points can be excluded.

Although the embodiments are described in detail above, the present disclosure is not limited to the specific embodiments, and various modifications and changes can be made within the scope of the claims. It is also possible to combine all or part of the constituent elements of the embodiments described above.

For example, in the above embodiment, the diffusion treatment may be performed immediately after the formation of the Al-containing layer, or may be performed after the formation of the Al-containing layer and processing such as pressing. The Al-containing layer may be formed by a method other than aluminizing or slurry, such as deposition, sputtering, calorizing, shot peening, or foil bonding.

### Description of the Reference Numerals

20 ... aluminum-containing layer (aluminium-containing layer), 30 ... insulating coating (oxide layer), 32 ... Al diffusion layer (aluminum diffusion layer)

## Claims

1. A steel treatment method comprising
performing diffusion treatment in an oxidizing atmosphere on steel for an electrical steel sheet with an aluminum-containing layer formed on a surface of the steel.

2. The steel treatment method according to claim 1, wherein
the steel before the aluminum-containing layer is formed contains silicon (Si) in a range of more than 0.00 mass% and 7.00 mass% or less, aluminum (Al) in a range of more than 0.00 mass% and 2.00 mass% or less, and manganese (Mn) in a range of more than 0.00 mass% and 1.00 mass% or less.

3. The steel treatment method according to claim 2, wherein
the aluminum-containing layer is in a form of a plating layer having a thickness in a range of 2 µm or more and 30 µm or less, and
a composition of the plating layer includes aluminum (Al), or includes, in addition to aluminum (Al), one or more of iron (Fe), silicon (Si), and manganese (Mn).

4. The steel treatment method according to claim 2, wherein
the diffusion treatment is performed under a treatment condition for obtaining a change gradient in which an aluminum concentration gradually decreases from the surface of the steel toward a center of a thickness.

5. The steel treatment method according to claim 2, wherein
the diffusion treatment is performed at a temperature in a range of 900°C or more and 1200°C or less and for a period in a range of 0.1 minutes or more and 1920 minutes or less.

6. The steel treatment method according to any one of claims 1 to 5, wherein
the diffusion treatment includes simultaneously forming an aluminum diffusion layer based on aluminum contained in the aluminum-containing layer, and an oxide layer based on the aluminum contained in the aluminum-containing layer and oxygen contained in the oxidizing atmosphere.

7. An electrical steel sheet comprising:
an oxide layer forming an insulating coating on a surface of a base material, the oxide layer containing one or more of aluminum, iron, silicon, and manganese; and
an aluminum diffusion layer in which an aluminum concentration gradually decreases from the surface of the base material toward a center of a thickness of the base material.

8. The electrical steel sheet according to claim 7, wherein
the oxide layer has a thickness in a range of 1 µm or more and 25 µm or less, and contains the aluminum or the iron in a range of 20 mass% or more and 80 mass% or less.

9. The electrical steel sheet according to claim 7 or 8, wherein
assuming that an Al gradient is a change gradient of the aluminum concentration with respect to a change in a thickness direction in the aluminum diffusion layer, and an Al gradient-thickness ratio is a value obtained by dividing the Al gradient by the thickness of the base material, and
assuming that, when an infiltration amount of the aluminum in the aluminum diffusion layer is calculated based on a diffusion depth of the aluminum in the aluminum diffusion layer and concentrations of the aluminum on the surface of the base material and the center of the thickness of the base material, an Al infiltration amount-thickness ratio is a value obtained by dividing the infiltration amount by the thickness of the base material,
Al gradient-thickness ratio × (Al infiltration amount-thickness ratio)^{1/2} is in a range of more than 0 and 0.000400 or less.

10. The electrical steel sheet according to claim 9, wherein
the Al infiltration amount-thickness ratio is in a range of more than 0 and 5.50 or less.
